# EUROPEAN PATENT SPECIFICATION

(11) **EP 0 772 536 B1**
(45) Date of publication and mention of the grant of the patent: **06.09.2000**
(21) Application number: 95925916.9
(22) Date of filing: 19.07.1995
(51) Int. Cl.: B60R 25/10

(54) **VEHICLE SECURITY SYSTEM**
FAHRZEUGSICHERHEITSSYSTEM
SYSTEME DE SECURITE

(30) Priority: 28.07.1994 GB 9415190
(43) Date of publication of application: 14.05.1997
(73) Proprietor: ROVER GROUP LIMITED, Warwick, Warwickshire CV34 6RG (GB)
(72) Inventor: CHARD, Jonathon, Solihull West Midlands B91 1TS (GB)
(74) Representative: Wilson, Alan Stuart
(86) International application number: GB9501701
(87) International publication number: WO9603298

(56) References cited:
- DE-A- 3 918 858

## Description

This invention relates to a vehicle security system having a movement sensor and a deadlocking system for the doors of the vehicle and a method of operating such system.

Movement sensors of the "volumetric" type are noncontact sensors which are used in security systems to monitor for and detect movement within the interior of vehicles, either in the passenger compartment or luggage compartment. Such sensors can detect unauthorised entry into the vehicle and operate the security system accordingly. They can also be used to detect whether a person or animal is inside the vehicle since such a person or animal will usually move by a detectable amount within the period of time over which a check is made.

In order to improve vehicle security, it has become common to equip a vehicle with a deadlock feature whereby it is possible to lock the vehicle doors and then to disable the operation of the interior lock control on each door. Such a system is shown in DE 39 18 858. With those controls disabled, it is possible to open the vehicle only by using a key in an external lock. Thus an intruder cannot open a vehicle door by breaking a window and unlocking a door from inside the vehicle.

It is known to associate the deadlock feature with a vehicle immobilisation and alarm system such that the action of setting the alarm and immobilising the vehicle, perhaps by a remote transmitter, can also be made to deadlock the doors. This has the advantage that the driver gets into the habit of deadlocking the doors every time the vehicle is left. However, it is not unknown accidentally to lock the vehicle with someone inside. If deadlocking is enabled, the person locked inside the vehicle will be unable to let themselves out.

Accordingly the present invention provides a vehicle security system comprising detection means for detecting the presence of a person in the vehicle, locking means for at least one door of the vehicle, interior lock control means for unlocking the locking means from inside the vehicle, deadlocking means for disabling the interior lock control means, control means for operating the deadlocking means, and a receiver, wherein the receiver is arranged to receive a deadlock signal, and the control means is arranged, on receipt of the deadlock signal, to monitor the output of the detection means for a predetermined time to check for the presence of a person in the vehicle and, if a person is detected, to inhibit operation of the deadlocking means.

The present invention also provides a method of operating a security system of a vehicle, the system including detection means for detecting the presence of a person in the vehicle, and means for activating a deadlocking means of the vehicle, the method comprising the steps of receiving a deadlock signal, monitoring the output of the detection means for a predetermined time to check for the presence of a person in the vehicle and, if a person is detected, inhibiting operation of the deadlocking means.

By using the detection means to detect the presence of a person in the vehicle prior to deadlocking it, the possibility of deadlocking someone in the vehicle is minimised.

Preferably the detection means comprises movement detection means which detects the presence of a person in the vehicle by detecting movement of the person.

Preferably, if a person is detected during the predetermined time, then an alarm is raised to draw the attention of the driver to the problem and to warn him that the vehicle is not deadlocked.

Preferably the monitoring of the detection means output is delayed for a predetermined delay period to allow the movement sensor output to stabilise. This is particularly important when using an ultrasonic movement sensor, for example of the type disclosed in earlier International Patent Application No. WO-A-93/19385, since such a sensor can be affected by air movement. The delay period allows time for the air in the vehicle to settle. Preferably also, the detection means is not activated or its output is ignored if any of the doors, windows, tailgate, sunroof or the like, which can be collectively referred to as wings, are open. In the case of an electric window and/or sunroof, these may be shut automatically upon receipt of the deadlock signal.

Advantageously, the vehicle doors may be caused to lock (but not to deadlock) immediately the deadlock signal is received.

The invention will now be described by way of example with reference to the accompanying drawings of which:
Figure 1 is a side view of a vehicle including a security system according to the invention, and
Figure 2 is a schematic block diagram of the system of Figure 1.

With reference to the drawings, a vehicle 1 has a security control unit 2 coupled to an R.F. receiver 4. The control unit 2 controls the door locks 3 of the vehicle and can cause them to lock and unlock, and also to engage or release a "deadlock" within the lock mechanism which prevents unlocking of the doors by use of the sill buttons 5. The receiver 4 is arranged to receive a "deadlock" signal from a remote R.F. transmitter 6. The transmitter 6 is of the type housed in a key fob. Also coupled to the control unit 2 is an ultrasonic movement sensor 8 for detecting movement at almost any point inside the passenger compartment 9a or luggage compartment 9b of the vehicle 1. It does this by checking for a Doppler shift in reflected ultrasound signals from various areas within the passenger compartment and luggage compartment. An audible alarm siren 10 is also connected to the control unit 2 and can be operated by it. Front and rear door sensors 12, 14 are provided in the form of switches which detect whether the front and rear doors are open or closed. Similar sensors 16, 18 are provided for the tailgate 20 and sunroof 22 respectively.

The system is adapted to try to minimise the possibility of deadlocking someone in the vehicle by inhibiting the deadlock feature of the vehicle if movement is sensed inside the vehicle.

In operation, once a deadlock signal which indicates that the vehicle should be deadlocked is received by the receiver 4, the vehicle doors are immediately locked. Five seconds later (to allow time for air in the vehicle to settle), the control unit 2 checks the door, sunroof and tailgate sensors 12, 14, 16, 18 to ensure that the doors, sunroof, tailgate and windows are shut. If they are, the control unit 2 then activates the movement sensor 8 for ten seconds. If no movement is sensed in this ten second period, the doors are deadlocked. If movement is detected in the ten second period this is taken as an indication that there may be a person 24 or animal inside the vehicle. The vehicle is therefore not deadlocked and an alarm is raised using the vehicle siren 10 as a warning that the vehicle has not been deadlocked and that it should therefore not be left.

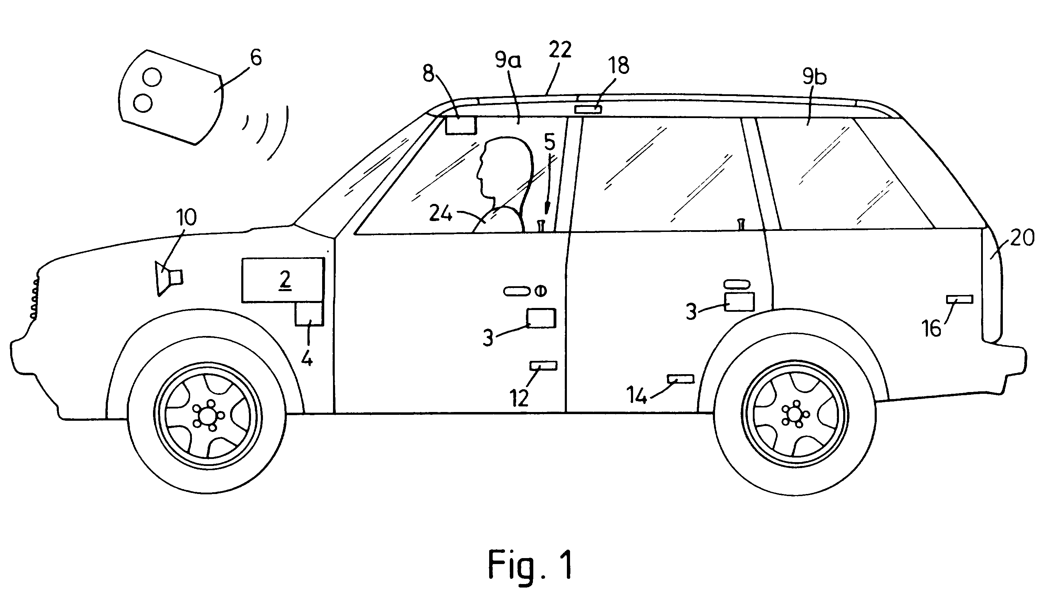

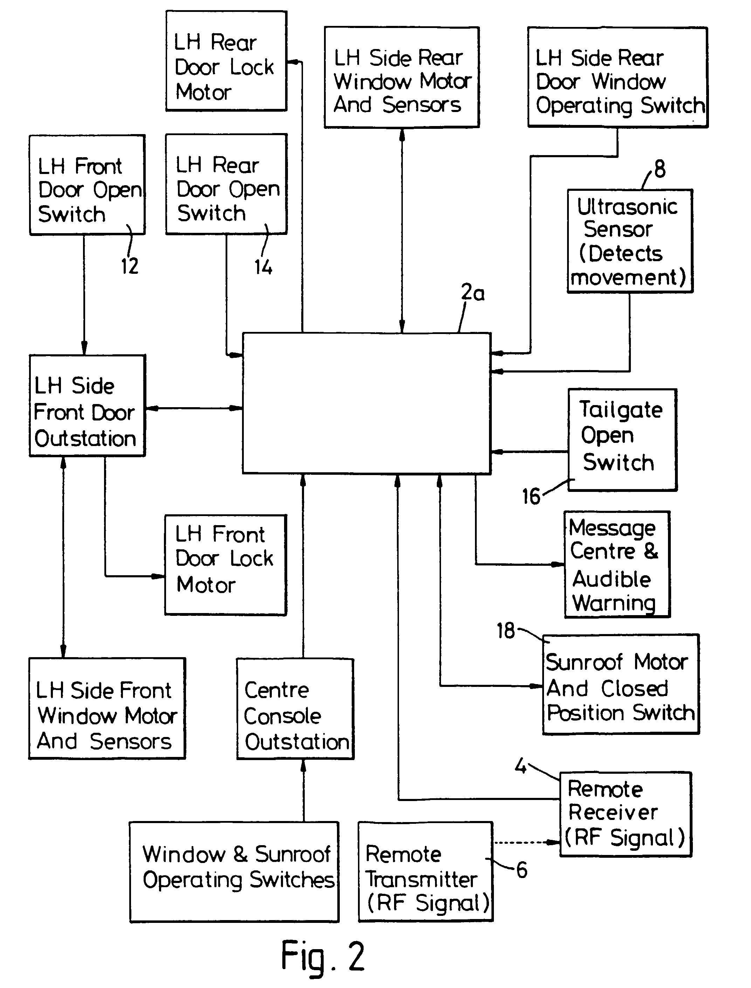

Although the control means is illustrated schematically in Figure 1 as a single unit, it is in fact laid out as shown in Figure 2. The control means 2 comprises the engine control unit which operates the vehicle immobilisation, and a body electrical control module (BeCM) 2a which has direct links with the sensors 12, 14, 16, 18 of both rear windows, both rear doors, the tailgate and the sunroof, the motors of both rear windows, both rear door locks, and the sunroof, the ultrasonic sensor, the message centre and audible warning (siren) which communicates information to the driver, and the receiver. The BeCM is also linked through a centre console outstation to the window and sunroof operating switches, and through left and right hand side front door outstations to the door lock motors, door sensors, window sensors and window motors of the left and right hand side front doors respectively.

It will be appreciated that the present invention would also be applicable to security systems with other means of detecting the presence of a person in the vehicle. An ultrasound system which detected the presence of a person in the driving seat, or any other position in the vehicle, by simply timing a reflected signal from that position could be operated in the same way.

## Claims

1. A vehicle security system comprising detection means (8) for detecting the presence of a person in the vehicle, locking means (3) for at least one door of the vehicle, interior lock control means for unlocking the locking means (3) from inside the vehicle, deadlocking means for disabling the interior lock control means, control means (2) for operating the deadlocking means, and a receiver (4), characterized in that the receiver is arranged to receive a deadlock signal, and the control means (2) is arranged, on receipt of the deadlock signal, to monitor the output of the detection means (8) for a predetermined time to check for the presence of a person (24) in the vehicle and, if a person is detected, to inhibit operation of the deadlocking means.

2. A system according to claim 1, characterized in that the detection means (8) comprises movement detection means which can detect the presence of a person (24) in the vehicle by detecting movement of the person.

3. A system according to claim 1 or claim 2, characterized in that it further comprises alarm means (10), wherein the control means (2) is arranged to operate the alarm means if the presence of a person is detected within the predetermined time.

4. A system according to any foregoing claim, characterized in that the control means (2) is arranged to delay the monitoring of the detection means (8) output for a predetermined delay period.

5. A system according to any preceding claim, characterized in that the system further comprises at least one sensor (2) for sensing whether a wing of the vehicle is open, wherein the control means (2) is arranged not to activate the detection means (8) or to ignore its output if said wing is open.

6. A method of operating a security system of a vehicle, the system including detection means (8) for detecting the presence of a person (24) in the vehicle, and means for activating a deadlocking means of the vehicle, characterized in that the method comprises the steps of receiving a deadlock signal, monitoring the output of the detection means (8) for a predetermined time to check for the presence of a person (24) in the vehicle and, if a person is detected, inhibiting operation of the deadlocking means.

7. A method according to claim 6, characterized in that the detection means comprises movement detection means (8).

8. A method according to claim 6 or claim 7, characterized by the step of raising an alarm if the presence of a person (24) is detected within the predetermined time.

9. A method according to any one of claims 6 to 8, characterized in that the monitoring of the detection means (8) output is delayed for a predetermined delay period.

10. A method according to any one of claims 6 to 9, characterized in that the detection means (8) is not activated and/or its output is ignored if a wing of the vehicle is open.

## Patentansprüche

1. Fahrzeugsicherheitssystem, das folgendes umfaßt: ein Erfassungssystem (8) zum Erfassen der Anwesenheit einer Person in dem Fahrzeug, ein Verriegelungsmittel (3) für mindestens eine Tür des Fahrzeugs, ein inneres Schloßsteuerungsmittel zum Entriegeln des Verriegelungsmittels (3) von innerhalb des Fahrzeugs, ein Einriegelungsmittel zum Sperren des inneren Schloßsteuerungsmittels, ein Steuerungsmittel (2) zum Betätigen des Einriegelungsmittels und einen Empfänger (4), dadurch gekennzeichnet, daß der Empfänger ausgelegt ist, ein Einriegelungssignal zu empfangen und das Steuerungsmittel (2) ausgelegt ist, bei Empfang des Einriegelungssignals das Ausgangssignal des Erfassungsmittels (8) für eine vorbestimmte Zeit zu überwachen, um auf die Anwesenheit einer Person (24) im Fahrzeug hin zu prüfen und bei Erfassen einer Person die Betätigung des Einriegelungsmittels zu sperren.

2. System nach Anspruch 1, dadurch gekennzeichnet, daß das Erfassungsmittel (8) ein Bewegungserfassungsmittel umfaßt, das die Anwesenheit einer Person (24) im Fahrzeug durch das Erfassen einer Bewegung der Person erfassen kann.

3. System nach Anspruch 1 oder 2, dadurch gekennzeichnet, daß es weiterhin ein Alarmmittel (10) umfaßt, wobei das Steuerungsmittel (2) dazu ausgelegt ist, das Alarmmittel zu betätigen, wenn die Anwesenheit einer Person innerhalb der vorbestimmten Zeit erfaßt wird.

4. System nach einem der vorhergehenden Ansprüche, dadurch gekennzeichnet, daß das Steuerungsmittel (2) dazu ausgelegt ist, das Überwachen des Ausgangssignals des Erfassungsmittels (8) für einen vorbestimmten Verzögerungszeitraum zu verzögern.

5. System nach nach einem der vorhergehenden Ansprüche, dadurch gekennzeichnet, daß das System mindestens einen Sensor (2) umfaßt, um zu erfassen, ob ein Flügel des Fahrzeugs offen ist, wobei das Steuerungsmittel (2) dazu ausgelegt ist, das Erfassungsmittel (8) nicht zu aktivieren oder sein Ausgangssignal zu ignorieren, wenn der Flügel offen ist.

6. Verfahren zum Betätigen eines Sicherheitssystems eines Fahrzeugs, wobei das System ein Erfassungsmittel (8) zum Erfassen der Anwesenheit einer Person (24) in dem Fahrzeug und ein Mittel zum Aktivieren eines Einriegelungsmittels des Fahrzeugs enthält, dadurch gekennzeichnet, daß das Verfahren folgende Schritte umfaßt: Empfangen eines Einriegelungssignals, Überwachen des Ausgangssignals des Erfassungsmittels (8) über eine vorbestimmte Zeit, um auf die Anwesenheit einer Person (24) im Fahrzeug hin zu prüfen und bei Erfassen einer Person die Betätigung des Einriegelungsmittels zu sperren.

7. Verfahren nach Anspruch 6, dadurch gekennzeichnet, daß das Erfassungsmittel ein Bewegungserfassungsmittel (8) umfaßt.

8. Verfahren nach Anspruch 6 oder 7, gekennzeichnet durch den Schritt, einen Alarm auszulösen, wenn die Anwesenheit einer Person (24) innerhalb der vorbestimmten Zeit erfaßt wird.

9. Verfahren nach einem der Ansprüche 6 bis 8, dadurch gekennzeichnet, daß die Überwachung des Ausgangssignals des Erfassungsmittels (8) für einen vorbestimmten Verzögerungszeitraum verzögert wird.

10. Verfahren nach einem der Ansprüche 6 bis 9, dadurch gekennzeichnet, daß das Erfassungsmittel (8) nicht aktiviert und/oder sein Ausgangssignal ignoriert wird, wenn ein Flügel des Fahrzeugs offen ist.

## Revendications

1. Système de sécurité pour véhicule comprenant un moyen de détection (8) pour détecter la présence d'une personne dans le véhicule, un moyen de verrouillage (3) pour au moins une porte du véhicule, un moyen de commande de verrouillage interne pour déverrouiller le moyen de verrouillage (3) depuis l'intérieur du véhicule, un moyen de condamnation pour désactiver le moyen de commande de verrouillage interne, un moyen de commande (2) pour activer le moyen de condamnation et un récepteur (4), caractérisé en ce que le récepteur est prévu pour recevoir un signal de condamnation, et le moyen de commande (2) est prévu, à la réception du signal de condamnation, pour surveiller la sortie du moyen de détection (8) pendant un temps prédéterminé pour établir la présence ou non d'une personne (24) dans le véhicule, et, si une personne est détectée, pour inhiber l'activation du moyen de condamnation.

2. Système selon la revendication 1, caractérisé en ce que le moyen de détection (8) comprend un moyen de détection de mouvement qui peut détecter la présence d'une personne (24) dans le véhicule en détectant le mouvement de la personne.

3. Système selon la revendication 1 ou 2, caractérisé en ce qu'il comprend en outre un moyen d'alarme (10), le moyen de commande (2) étant prévu pour activer le moyen d'alarme si la présence d'une personne est détectée durant le temps prédéterminé.

4. Système selon l'une quelconque des revendications précédentes, caractérisé en ce que le moyen de commande (2) est prévu pour retarder la surveillance de la sortie du moyen de détection (8) pendant une période de retard prédéterminée.

5. Système selon l'une quelconque des revendications précédentes, caractérisé en ce que le système comprend en outre au moins un détecteur (2) pour établir si une aile du véhicule est ouverte, le moyen de commande (2) étant prévu pour ne pas activer le moyen de détection (8) ou pour ignorer sa sortie si ladite aile est ouverte.

6. Procédé pour actionner un système de sécurité d'un véhicule, ce système comprenant un moyen de détection (8) pour détecter la présence d'une personne (24) dans le véhicule, et un moyen pour activer un moyen de condamnation du véhicule, caractérisé en ce que le procédé comprend les étapes consistant à recevoir un signal de condamnation, surveiller la sortie du moyen de détection (8) pendant un temps prédéterminé pour établir la présence ou non d'une personne (24) dans le véhicule et, si une personne est détectée, inhiber l'activation du moyen de condamnation.

7. Procédé selon la revendication 6, caractérisé en ce que le moyen de détection comprend un moyen de détection de mouvement (8).

8. Procédé selon la revendication 6 ou 7, caractérisé par l'étape consistant à déclencher une alarme si la présence d'une personne (24) est détectée pendant le temps prédéterminé.

9. Procédé selon l'une quelconque des revendications 6 à 8, caractérisé en ce que la surveillance de la sortie du moyen de détection (8) est retardée d'une période de retard prédéterminée.

10. Procédé selon l'une quelconque des revendications 6 à 9, caractérisé en ce que le moyen de détection (8) n'est pas activé et/ou sa sortie est ignorée si une aile du véhicule est ouverte.
